Europäisches Patentamt

European Patent Office

Office européen des brevets

(11) Veröffentlichungsnummer: **0 311 810 B1**

# (12) EUROPÄISCHE PATENTSCHRIFT

(45) Veröffentlichungstag der Patentschrift: **04.12.91**

(51) Int. Cl.⁵: **F16C 11/06**

(21) Anmeldenummer: **88115097.3**

(22) Anmeldetag: **15.09.88**

(54) **Demontierbares Kugelgelenk mit Deckeldichtung für Kraftfahrzeuge.**

(30) Priorität: **16.10.87 DE 3735105**

(43) Veröffentlichungstag der Anmeldung:
**19.04.89 Patentblatt 89/16**

(45) Bekanntmachung des Hinweises auf die
Patenterteilung:
**04.12.91 Patentblatt 91/49**

(84) Benannte Vertragsstaaten:
**ES FR GB IT SE**

(56) Entgegenhaltungen:
**EP-A- 0 075 414**
**FR-A- 1 434 219**
**FR-A- 2 246 407**

**PATENT ABSTRACTS OF JAPAN**, Band 12,
Nr. 52 (M-668)[2899], 17. Februar 1988; & JP-
A-62 200 010 (TOKAI T R W K.K.) 03-09-1987

**PATENT ABSTRACTS OF JAPAN**, Band 11,
Nr. 289 (M-625)[2736], 18. September 1987; &
JP-A-62 83 513 (MUSASHI SEIMITSU IND.,
CO., LTD) 17-04-1987

(73) Patentinhaber: **LEMFOERDER METALLWAREN**
**AG.**
**Postfach 1220**
**W-2844 Lemförde(DE)**

(72) Erfinder: **Lustig, Wilfried**
**Osnabrücker Strasse 130**
**W-2844 Hüde(DE)**

(74) Vertreter: **Bruse, Willy Hans Heinrich**
**Edisonstrasse 14**
**W-2800 Bremen 33(DE)**

**Beschreibung**

Die Erfindung betrifft ein demontierbares Kugelgelenk mit Deckelabdichtung und den weiteren Merkmalen nach dem Gattungsbegriff des Patentanspruches 1.

Kugelgelenke dieser Gattung sind zum Beispiel aus der FR-A-2 246 407 bekannt und werden vielfach als Zentralgelenke für Dreiecklenker im Nutzfahrzeugbau eingesetzt. Solche Zentralgelenke sollen demontierbar sein, um Reparaturen zu ermöglichen. Bei modernen Kraftfahrzeugkonstruktionen steht für den Einbau der Zentralgelenke nur eine relativ geringe Bauhöhe zur Verfügung. Abweichend von Kugelgelenken mit einem durch Bördelung oder Materialverformung auf andere Weise geschlossenen Gehäuse wird die offene Gehäuseseite bei Gelenken der erfindungsgemäßen Gattung durch einen meist metallischen Deckel geschlossen, der mit einem im Querschnitt etwa U-förmigen Profilrand und einer in diesen eingelegten elastischen Dichtung den offenen Gehäuserand übergreift und mit diesem an mehreren Stellen, zum Beispiel durch Punktschweißung, verbunden ist. Außerdem ist unterhalb des Deckels ein in eine Innennut des Gehäuses eingesetzter Sicherungsring vorgesehen, gegen den sich ein Spannring abstützt, der die Gelenkschale unter Vorspannung gegen den Kugelkopf drückt. Gegenüber der weiter oben erwähnten Bauart mit durch Materialverformung geschlossenem Gehäuse entsteht somit ein höherer Herstellungsaufwand und auch eine größere Bauhöhe. Kugelgelenke mit einem Verschlußdeckel, der mit seinem Rand unter Verformung des Deckels in eine innere Ringnut des innen zylindrischen Gehäuses eingesetzt ist und auch ein Gehäuseverschluß mit einer in eine solche Innennut eingesetzten Verschlußscheibe sind an sich aus der EP-A-0 075 414 bekannt.

Aufgabe der Erfindung ist die Ausbildung eines vorwiegend als Zentallager für Dreieckslenker einsetzbaren Kugelgelenks mit verringerter Bauhöhe und geringerem Herstellungsaufwand sowie verbesserter Reparaturmöglichkeit.

Diese Aufgabe löst die Erfindung durch die Ausbildungsmerkmale nach dem Kennzeichen des Patentanspruches 1.

Durch diese Ausbildungsmerkmale entfällt die Profilierung des Deckelrandes und dessen Befestigung am Gehäuserand. Eine bei bekannten Anordnungen festgestellte Schwachstelle im oberen Verschlußbereich wird damit beseitigt. Der Deckel selbst kann gegenüber herkömmlichen Ausführungen mit einer wesentlich niedrigeren Wölbung ausgeführt werden. Eine Dichtung im Deckelrand zur Abdichtung des Gehäuses beim Verschluß desselben entfällt völlig. Kugelgelenke nach der Erfindung sind daher einfacher herzustellen und weisen eine geringere Bauhöhe sowie im Bereich des Sicherungsringes einen stärkeren Materialquerschnitt auf. Die Kosten der Kappe aus elastischem Werkstoff fallen demgegenüber nicht ins Gewicht. Beträchtlich verbessert wird die Reparaturmöglichkeit des Gelenkes, weil die Kappe aus elastischem Werkstoff leicht abgezogen werden kann, so daß der lose Deckel aus dem Gelenk herausfällt. Beim montierten Gelenk drückt diese Kappe aus elastischem Werkstoff den Deckel mit einer gewissen Spannung gegen den Sicherungsring, so daß der Deckelrand gegen den Sicherungsring gedrückt wird. Die Kappe aus elastischem Werkstoff greift mit ihrem Rand in eine umlaufende Nut am Außenumfang des Gehäuserandes ein und ist darin mittels eines Spannringes befestigt. Es ist daher nicht nötig, beim Schließen des Gehäuses Teile des Kugelgelenkes fest miteinander zu verbinden, so daß diese Verbindungen beim Öffnen des Gelenks zuvor gelöst werden müssen.

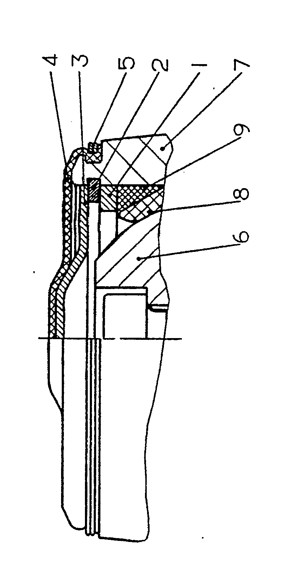

Auf der Zeichnung ist ein Ausführungsbeispiel der Erfindung teilweise in Seitenansicht und teilweise im Schnitt dargestellt, wobei nur der obere Rand des Gehäuses gezeichnet ist.

Das Kugelgelenk besteht aus der inneren Gelenkkugel 6, dem äußeren Gelenkgehäuse 7 und der dazwischen angeordneten Gelenkschale 8 aus einem elastischen Werkstoff. Ein in das innen zylindrische Gehäuse 7 von dessen offener Seite her eingesetzter Keilring 9 hintergreift die Gelenkschale 8 und preßt diese mit Vorspannung gegen den Umfang der Gelenkkugel 6. Der Keilring 9 stützt sich dabei gegen die Verschlußscheibe 1 ab, die durch den Sicherungsring 2 gehalten ist, welcher in eine innere Umfangsnut des Gehäuses 7 eingesetzt ist. Auf diesen Sicherungsring 2 ist der metallische Deckel 3 mit seinem Rand lose aufgelegt. Der Deckel 3 wird durch die Kappe 4 aus elastischem Material gehalten, welche mit einem Randwulst in eine Außennut des Gehäuses 7 eingreift und darin mittels eines Spannringes 5 befestigt ist. Anstelle des metallischen Deckels 3 können auch Deckel aus Kunststoff oder einem anderen festen Werkstoff Verwendung finden. Die Kappe 4 besteht aus Gummi oder einem entsprechend elastischen Kunststoff.

**Patentansprüche**

1. Demontierbares Kugelgelenk mit Deckelabdichtung für Kraftfahrzeuge, bei dem die die Gelenkkugel (6) aufnehmende, in das Gehäuse eingesetzte Gelenkschale (8) aus elastischem Werkstoff an der offenen, dem Gelenkzapfen an der Gelenkkugel gegenüberliegenden Gehäuseseite durch eine Verschlußscheibe (1) unter Vorspannung gehalten ist, die sich gegen einen in eine innere Ringnut des Gehäuses eingesetzten Sicherungsring (2) abstützt, und bei dem die offene Gehäuseseite durch einen Deckel (3) aus einem festen Werkstoff verschlossen ist, dadurch gekennzeichnet, daß der Deckel (3) außerhalb des Sicherungsringes (2) lose in das Gehäuse (7) eingelegt und durch eine den Gehäuserand übergreifende und an ihm befestigte Kappe (4) aus einem elastischen Werkstoff gehalten ist.

2. Kugelgelenk nach Anspruch 1, dadurch gekennzeichnet, daß der Deckel (3) mit seinem Rand auf dem Sicherungsring (2) liegt, und daß die mit einer Vorspannung aufgesetzte Kappe (4) den Deckel (3) gegen diesen Sicherungsring (2) drückt.

3. Kugelgelenk nach den Ansprüchen 1 und 2, dadurch gekennzeichnet, daß der den Gehäuserand an der offenen Gehäuseseite übergreifende Rand der Kappe (4) aus elastischem Werkstoff am Gehäuserand in eine umlaufende Nut eingreift und darin mittels eines Spannringes (5) befestigt ist.

## Claims

1. A dismantlable ball-and-socket joint with a lid seal for motor vehicles, in which the elastic material joint cup (8) receiving the joint ball (6) and inserted in the housing is held under prestress on the open housing side lying opposite the joint pin on the joint ball by a sealing disc (1), which is supported against a retaining ring (2) inserted in an inner annular groove in the housing, and in which the open housing side is sealed by a lid (3) made of a rigid material, characterised in that the lid (3) is inserted loosely into the housing (7) outside the retaining ring (2) and is held by a cap (4) made of an elastic material overlapping the housing edge and secured to said housing edge.

2. A ball-and-socket joint according to claim 1, characterised in that the lid (3) rests with its edge upon the retaining ring (2) and the cap (4) fitted with prestress pushes the lid (3) against said retaining ring (2).

3. A ball-and-socket joint according to claims 1 and 2, characterised in that the edge of the elastic material cap (4) overlapping the housing edge on the open housing side engages in a peripheral groove at the housing edge and is secured therein by means of a tensioning ring (5).

## Revendications

1. Articulation démontable à rotule avec étanchéification du couvercle pour des véhicules automobiles, le coussinet d'articulation (8) en matériau élastique, recevant la rotule (6) et inséré dans le corps d'articulation, étant, du côté ouvert du corps d'articulation qui est opposé au pivot d'articulation de la rotule, maintenu sous précontrainte par une rondelle de fermeture (1) qui s'appuie contre un jonc d'arrêt (2) inséré dans une rainure annulaire intérieure du corps d'articulation, et le côté ouvert du corps d'articulation étant fermé par un couvercle (3) en matériau résistant, caractérisée en ce que le couvercle (3) est monté librement dans le corps d'articulation (7) à l'extérieur du jonc d'arrêt (2), et est maintenu par un chapeau (4) en matériau élastique, qui recouvre le bord du corps d'articulation et est fixé sur lui.

2. Articulation à rotule selon la revendication 1, caractérisée en ce que le couvercle (3) repose par son bord sur le jonc d'arrêt (2), et en ce que le chapeau (4), soumis à une précontrainte, presse le couvercle (3) contre ce jonc d'arrêt (2).

3. Articulation à rotule selon la revendication 1 ou 2, caractérisée en ce que le bord du chapeau (4) en matériau élastique, recouvrant le bord du corps d'articulation du côte ouvert de ce dernier, s'engage dans une rainure entourante et y est fixé à l'aide d'un anneau de serrage (5).